(19) Europäisches Patentamt
European Patent Office
Office européen des brevets

(11) **EP 3 695 945 B1**

(12) **EUROPÄISCHE PATENTSCHRIFT**

(45) Veröffentlichungstag und Bekanntmachung des Hinweises auf die Patenterteilung:
**17.11.2021   Patentblatt 2021/46**

(51) Int Cl.:
***B29B 7/74*** *(2006.01)*      ***B29B 7/44*** *(2006.01)*
***B29B 7/58*** *(2006.01)*

(21) Anmeldenummer: **20152299.2**

(22) Anmeldetag: **16.01.2020**

(54) **VERFAHREN ZUR KONTINUIERLICHEN VERMISCHUNG MINDESTENS EINER POLYOLKOMPONENTE MIT MINDESTENS EINER ISOCYANATKOMPONENTE, UND DARAUF BEZOGENER RÜHRERMISCHER**

METHOD FOR CONTINUOUS MIXING OF AT LEAST ONE POLYOL COMPONENT WITH AT LEAST ONE ISOCYANATE COMPONENT, AND RELATED STIRRER MIXER

PROCÉDÉ DE MÉLANGE EN CONTINU D'AU MOINS UN COMPOSANT POLYOL AVEC AU MOINS UN COMPOSANT ISOCYANATE, ET MÉLANGEUR À AGITATION ASSOCIÉ

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **15.02.2019   DE 102019103945**

(43) Veröffentlichungstag der Anmeldung:
**19.08.2020   Patentblatt 2020/34**

(73) Patentinhaber: **Hennecke GmbH**
**53757 Sankt Augustin (DE)**

(72) Erfinder:
• **Konstantinovic, Miodrag**
**53229 Bonn (DE)**
• **Thiebes, Florian**
**53639 Königswinter (DE)**

(74) Vertreter: **Gosdin, Carstensen & Partner Patentanwälte Partnerschaftgesellschaft mbB Adam-Stegerwald-Straße 6 97422 Schweinfurt (DE)**

(56) Entgegenhaltungen:
EP-A1- 0 328 936      WO-A1-92/14595
DE-A1- 2 558 304      DE-A1- 3 623 932
US-A- 3 208 958       US-A- 3 232 709
US-A- 3 881 871

**Beschreibung**

Die Erfindung betrifft ein Verfahren zur kontinuierlichen Vermischung mindestens einer Polyolkomponente mit mindestens einer Isocyanatkomponente zur Herstellung eines Polyurethan-Reaktionsgemisches, bei dem die mindestens eine Polyolkomponente und die mindestens eine Isocyanatkomponente einem Rührermischer zugeführt werden, wobei der Rührermischer einen ersten Abschnitt aufweist, in dem eine drehantreibbare Rührerwelle mit einer Anzahl Rührelemente angeordnet ist, mit denen die Komponenten vermischt werden, wobei der Rührermischer einen zweiten Abschnitt aufweist, durch den das Polyurethan-Reaktionsgemisches gefördert und einer Auslassöffnung zugeführt wird, wobei zwischen dem ersten Abschnitt und dem zweiten Abschnitt ein Drosselspalt angeordnet ist, durch den das Polyurethan-Reaktionsgemisch hindurchgefördert wird. Des weiteren betrifft die Erfindung einen Rührermischer.

Polyurethan-Schaumkunststoff entsteht durch die chemische Reaktion von Polyol und Isocyanat und gegebenenfalls Zusatzkomponenten, wie Stabilisatoren, Aktivatoren, Treibmitteln und Farbstoffen. Damit die flüssigen Komponenten in geeigneter Weise miteinander reagieren können, müssen sie zu einem homogenen Reaktionsgemisch vermischt werden. Zur Ausführung dieser verfahrenstechnischen Grundoperation sind verschiedene Grundprinzipien bekannt.

Eine Möglichkeit, die Polyurethan-Rohstoffe zu vermischen, bietet der Einsatz kontinuierlich arbeitender Rührermischer. Diese Rührermischer bestehen in der Regel aus einer rotationssymmetrischen Mischkammer, in der ein Rührelement (Rührer), angetrieben von einem Motor, rotiert. Optional kann die Mischkammer innen feststehende Einbauten (sog. Gegenstifte) besitzen, die den Rührvorgang unterstützen. Die eigentliche Mischzone ist dabei ein ringförmiger Strömungsbereich, der durch die zylindrische Außenwandung und die Rührerwelle gebildet wird. Dieser ringförmige Strömungsraum mündet ausgangsseitig am Ende der Rührerwelle in einen im wesentlichen zylindrischen Strömungsraum.

Bei kontinuierlich arbeitenden Rührermischern werden die zu vermischenden Komponenten in der Regel radial von außen zugeführt. Die Zuführung in die Mischkammer erfolgt dabei durch Düsen oder im einfachsten Fall durch Rohre.

Die Komponenten werden dem Mischer in diesem Prozess mit Hilfe von Pumpen zugeführt.

Ein gattungsgemäßen Verfahren sowie eine entsprechende Vorrichtung offenbart die DE 25 58 304 A1. Ähnliche Lösungen zeigen die EP 0 328 936 A1, die DE 36 23 932 A1 und die DE 10 2011 013 742 A1.

In der EP 1 539 450 B1 wird der genannte Prozess detailliert beschrieben, wobei verschiedene Rührer-Geometrien offenbart werden. Außerdem wird der Einfluss des Mischkammerdruckes auf die spätere Zellstruktur des ausreagierten Polyurethanschaumes beschrieben.

In der EP 0 565 974 B1 wird detailliert beschrieben, wie der Gasgehalt der Rohstoffe, also die Menge der in den Rohstoffen gelösten Gase, die spätere Schaumstruktur beeinflusst.

In dem Artikel "Urethane Foam Formation - Role of the Silicone Surfactant" (Journal of Cellular Plastic 5, 1969, S. 32 bis 39), führen die Autoren B. Kanner und T. G. Decker aus, dass die Anzahl der Nukleationskeime in der Mischkammer die Anzahl der Zellen im ausreagierten Schaum festlegt. Bei den Nukleationskeimen handelt es sich um feine Gasblasen, in die dann im weiteren Prozessverlauf das Treibgas diffundiert. Die Gasblasen entstehen nicht spontan, sobald ein bestimmter Übersättigungsgrad an Treibgas vorhanden ist, sondern sie liegen bereits in der Mischkammer vor.

Nach dem Stand der Technik gibt es für diesen Prozessschritt verschiedene Alternativen:
Luft kann direkt in die Mischkammer zugegeben werden.

Luft kann auch dem Polyol zugegeben werden und gelangt dann mit dem Polyol in die Mischkammer.

Weiterhin kann durch Verdüsen des Isocyanats die in dem Isocyanat gelöste Luft oder ein anderes gelöstes Gas, wie z. B. Stickstoff, in Form von feinen Gasblasen freigesetzt werden.

Ferner kann Luft der Stabilisatorkomponente zugegeben werden, so dass diese dann mit der Stabilisatorkomponente in die Mischkammer gelangt.

Schließlich können die schnell rotierenden Rührelemente bewirken, dass in den Komponenten gelöste Luft in Form feiner Gasblasen freigesetzt wird.

Das bedeutet, dass in der Mischkammer neben den flüssigen Reaktionskomponenten stets auch feine Gasblasen vorliegen, die als Nukleationskeime für die späteren Zellen dienen. Die Kombination aus einem mit hoher Drehzahl (typische Drehzahlen liegen im Bereich von 1.000 bis 6.000 U/min) rotierenden Rührer und einem Gemisch aus flüssigen Komponenten und Gasblasen führt dazu, dass die Gasblasen aufgrund des Zentrifugalfeldes und aufgrund ihrer geringen Dichte in Richtung Mittelachse der Mischkammer wandern und sich gegebenenfalls dort sammeln. Wenn die feinen Gasblasen sich jedoch in der Mitte ansammeln, führt dies nachteilig dazu, dass gelegentlich das sich in der Mitte ansammelnde Gas von der Strömung mitgerissen werden kann. Dabei entstehen dann größere Gasblasen, die im ausreagierten Schaum in Form von Lunkern oder sogenannten Pinholes sichtbar werden. Dabei handelt es sich im Vergleich zur sonstigen Zellstruktur um sichtbar größere Zellen, die je nach Anwendung des Produktes störend sind und zu Ausschuss führen.

Untersuchungen der Patentinhaberin bezüglich dieses Problems haben überraschenderweise gezeigt, dass sich das Gas im wesentlichen nicht innerhalb der eigentlichen Mischzone an der Rührerwelle sammelt, sondern hauptsächlich hinter der Rührerwelle, wo die noch nicht abgebaute Rotationsströmung häufig noch von einer Rückströmung in axialer Richtung überlagert wird. Diese überlagerten Strömungen bewirken, dass eine Gasschleppe am Ende der Rührerwelle entstehen kann. Diese wächst mit der Zeit an und wird dann periodisch von der Strömung zumindest teilweise mitgerissen.

Um sicherzustellen, dass das Reaktionsgemisch laminar und frei von Rotation ausgetragen wird, ist es zwar bereits üblich, zwischen der eigentlichen Mischzone und der Austrittsöffnung einen kreuzartigen Einbau vorzusehen. Dieses Kreuz wird allerdings erst kurz vor dem Austritt des Reaktionsgemisches in die Atmosphäre angebracht und verhindert nicht die Bildung einer Gasschleppe am Ende der Rührerwelle, sondern stellt lediglich einen laminaren Austrag des Reaktionsgemisches aus dem Rührermischer sicher.

Der Erfindung liegt daher die **Aufgabe** zugrunde, ein gattungsgemäßes Verfahren und einen zu dessen Durchführung geeigneten Rührermischer bereitzustellen, mit dem es möglich ist, eine Verbesserung der Zellstruktur des herzustellenden Polyurethans zu erreichen. Dabei wird insbesondere angestrebt, bei dem genannten Verfahren zur Vermischung sicherzustellen, dass sich in der Mischkammer bzw. unmittelbar dahinter keine Gasblasen sammeln können, die dann zu Störungen in der Zellstruktur führen.

Die **Lösung** dieser Aufgabe wird durch das im Anspruch 1 definierte Verfahren beschrieben, welches dadurch gekennzeichnet ist, dass bei dem eingangs genannten Verfahren erfindungsgemäss vorgesehen wird, dass das Polyurethan-Reaktionsgemisch durch die Rührelemente im ersten Abschnitt auf eine maximale Geschwindigkeit in Umfangsrichtung von mindestens 5 m/min beschleunigt wird und dass im Bereich des Drosselspalts Strömungsleitelemente angeordnet sind, mit denen die maximale Geschwindigkeit in Umfangsrichtung des Polyurethan-Reaktionsgemisches um mindestens 50 %, vorzugsweise um mindestens 70 %, reduziert wird, wobei sich zum Abbremsen des Polyurethan-Reaktionsgemisches die Strömungsleitelemente in axiale Richtung des Rührermischers mindestens 30 mm erstrecken, wobei die Strömungsleitelemente als Bleche ausgebildet sind, die am Gehäuse des Rührermischers oder einem mit diesem verbundenen Teil befestigt sind und wobei die Strömungsleitelemente eine radiale Erstreckung aufweisen, die in einem Abstand von mindestens 10 % des Innenradius des Gehäuses am Ort der Strömungsleitelemente endet.

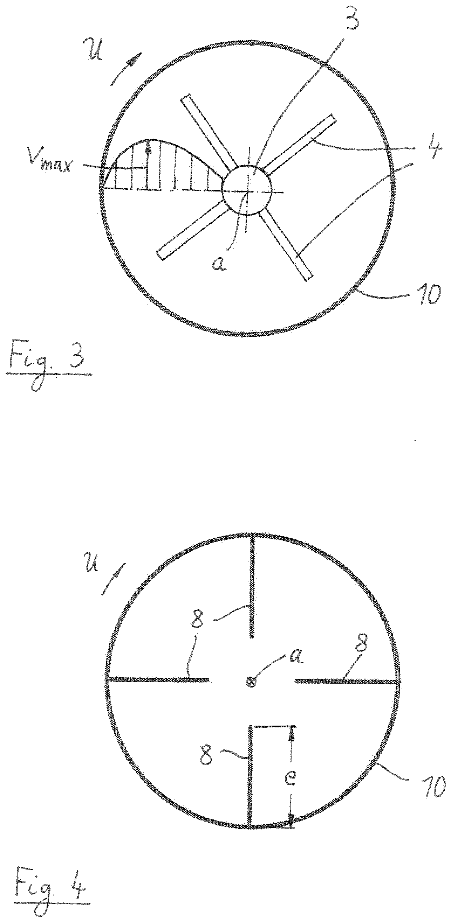

Bevorzugt werden die axiale Ausdehnung L der Leitelemente (d. h. deren Erstreckung in axiale Richtung), die Anzahl der Leitelemente n und der mittlere Außendurchmesser d im Bereich der Leitbleche (Innendurchmesser des Gehäuses 10, s. Fig. 4) so gewählt, dass die Beziehung gilt:

$$\frac{\pi \cdot d}{n \cdot L} < 3$$

Besonders bevorzugt sollte dieser Quotient sogar kleiner als 2 sein. Auf diese Weise ist sichergestellt, dass die Umfangsgeschwindigkeit am Eintritt in den zweiten Abschnitt des Rührermischers maximal doppelt (bzw. maximal dreimal) so groß ist, wie die Axialgeschwindigkeit in diesem Bereich, während dieses Verhältnis in der Mischzone häufig einen Wert oberhalb von 10 erreicht.

Die Strömungsleitelemente sind dabei gemäß einer bevorzugten Ausgestaltung der Erfindung in Förderrichtung des Polyurethan-Reaktionsgemisches unmittelbar hinter dem Drosselspalt angeordnet. Es kann aber auch vorgesehen sein, dass die Strömungsleitelemente in Förderrichtung des Polyurethan-Reaktionsgemisches unmittelbar vor dem Drosselspalt angeordnet sind. In Kombination der beiden Möglichkeiten kann weiterhin vorgesehen sein, dass sowohl unmittelbar hinter als auch unmittelbar vor dem Drosselspalt jeweils Strömungsleitelemente angeordnet sind.

Der Drosselspalt kann durch einen konisch ausgebildeten Endbereich der Rührerwelle gebildet werden. Er kann dabei in seiner Größe einstellbar sein. Auf diese Weise lässt sich der Mischkammerdruck variabel einstellen. In einer bevorzugten Ausführungsform handelt es sich bei dem Drosselspalt um einen Ringspalt, der den Übergang aus dem ersten Abschnitt des Rührermischers (d. h. der ringförmigen Mischzone) in den zweiten Abschnitt des Rührermischers bildet. Idealerweise verjüngen sich sowohl die Außenkontur als auch die Innenkontur des Drosselspaltes, da dies eine totraumfreie Strömung in diesem Übergangsbereich begünstigt.

Der Druck im Rührermischer am Eintritt der Komponenten ist vorzugsweise maximal 2,0 bar höher als der Umgebungsdruck.

Der vorgeschlagene Rührermischer gemäss Anspruch zum kontinuierlichen Vermischen mindestens einer Polyolkomponente mit mindestens einer Isocyanatkomponente zur Herstellung eines Polyurethan-Reaktionsgemisches nach dem erfindungsgemässen Verfahren weist einen ersten Abschnitt auf, in dem eine drehantreibbare Rührerwelle mit einer Anzahl Rührelemente angeordnet ist, mit denen die Komponenten vermischt werden können, sowie einen zweiten Abschnitt, durch den das Polyurethan-Reaktionsgemisch gefördert und einer Auslassöffnung zugeführt werden kann, wobei zwischen dem ersten Abschnitt und dem zweiten Abschnitt ein Drosselspalt angeordnet ist, durch den das Polyurethan-Reaktionsgemisch hindurchgefördert werden kann. Erfindungsgemäß ist bei einem solchen Rührermischer vorgesehen, dass im Bereich des Drosselspalts Strömungsleitelemente angeordnet sind, mit denen die Bewegung des Polyurethan-Reaktionsgemisches in Umfangsrichtung abgebremst werden kann, wobei sich die Strömungsleitelemente in axiale Richtung des Rührermischers mindestens 30 mm erstrecken, wobei die Strömungsleitelemente als Bleche ausgebildet sind, die am Gehäuse des Rührermischers oder einem mit diesem verbundenen Teil befestigt sind und wobei die Strömungsleitelemente eine radiale Erstreckung aufweisen, die in einem Abstand von mindestens 10 % des Innenradius des Gehäuses am Ort der Strömungsleitelemente endet.

Der Kegelwinkel des Endbereichs des konisch ausgebildeten Endbereichs der Rührerwelle liegt vorzugsweise zwischen 15° und 120°, besonders bevorzugt zwischen 60° und 100°.

Die Strömungsleitelemente können sich in radiale Richtung erstrecken.

Es hat sich nämlich als vorteilhaft erwiesen, wenn die Strömungsleitelemente im Zentrum nicht miteinander verbunden sind.

Der mindestens einen Polyolkomponente und der mindestens einen Isocyanatkomponente kann Wasser als chemisches Treibmittel zugegeben sein, sowie gegebenenfalls weitere Additive.

Mit der vorgeschlagenen Vorgehensweise bzw. vorrichtungstechnischen Ausgestaltung wird in vorteilhafter Weise erreicht, dass einerseits die Rotation der Strömung frühzeitig, idealerweise bevor das Reaktionsgemisch aus dem zwischen dem Rührer und der Mischkammer gebildeten ringförmigen Strömungsraum in den im wesentlichen zylindrischen Strömungsraum übertritt, deutlich reduziert wird und andererseits die Rückströmung hinter der Rührerwelle unterbunden bzw. zumindest erheblich vermindert wird.

Die Mischkammer, in der die Rührerwelle rotiert, ist vorzugsweise zylindrisch gestaltet. Auf der Rührerwelle sind die Rührelemente vorzugsweise in mehreren Ebenen angeordnet. Damit liegt zumeist ein ringförmiger Strömungsraum zwischen der Rührerwelle und der zylindrischen Mischkammer vor. Jenseits des Drosselspalts geht dann die Mischkammer in einen zumeist zylindrischen Strömungsraum über.

In der Mischkammer (erster Abschnitt des Rührermischers) liegen neben den flüssigen Reaktionskomponenten auch Gasblasen vor, wobei die Reaktionskomponenten mittels des rotierenden Rührers in der Mischkammer in Rotation versetzt werden, wodurch das Reaktionsgemisch auf Umfangsgeschwindigkeiten oberhalb von 5 m/min beschleunigt wird. Anschließend wird die Rotation durch die Strömungsleitelemente, die zwischen dem letzten Rührelement und der Austragsöffnung am Ende des zweiten Abschnitts des Rührermischers angeordnet sind, auf eine maximale Umfangsgeschwindigkeit unterhalb von 2 m/min, bevorzugt unterhalb von 1 m/min, reduziert.

Bei den Strömungsleitelementen handelt es sich im einfachsten Fall um ebene Bleche, die radial zur Rührerachse angeordnet sind. Aufgrund der im Vergleich zur Axialgeschwindigkeit hohen Umfangsgeschwindigkeiten der Strömung ergibt sich somit ein kleiner Winkel zwischen den Geschwindigkeitsvektoren der in diesem Bereich eintretenden Strömung und der Flächennormalen der Leitbleche.

Vorteilhaft sind gebogene Bleche, welche die rotierende Strömung im Einströmbereich zunächst weniger und im weiteren Verlauf dann stärker umlenken. In diesem Fall schließen die Flächennormalen der zu den Leitblechen tangentialen Ebenen im Einströmbereich einen größeren Winkel mit den Geschwindigkeitsvektoren der in diesem Bereich eintretenden Strömung ein.

Denkbar sind auch komplexere Strukturen für die Strömungsleitelemente, wie z. B. bei statischen Mischelementen. Als Beispiel sei hier eine Struktur wie bei dem sogenannten "SMX-Mischer" (Sulzer) mit kreuzweise angeordneten Stegen angeführt. Andere Beispiele sind der sogenannte "Kenics-Mischer", der aus um 180° verdrillten Blechen besteht, wobei jede Wendel um 90° zur vorigen versetzt ist und einen gegensätzlichen Drehsinn aufweist.

Im Stand der Technik sind darüber hinaus verschiedene Bauarten von statischen Mischern bekannt. Der Vorteil solcher statischer Mischelemente besteht darin, dass sie noch eine zusätzliche Vermischung der Komponenten bewirken. Aufgrund der verfügbaren Fertigungsmöglichkeiten mit 3-D-Druckern sind hier grundsätzlich vielfältige unterschiedliche Strukturen denkbar. Allerdings ist dabei stets zu berücksichtigen, dass diese Einbauten von reaktivem Gemisch umströmt werden, welches auch bei stundenlanger Produktion möglichst wenig an den Einbauten anbacken sollte.

Wichtig ist, dass die Strömungsleitelemente die Umfangsgeschwindigkeit des Gemisches auf Werte unterhalb von 2 m/min und bevorzugt unterhalb von 1 m/min reduzieren, damit die Triebkraft für Gasblasen in Richtung der Rührerachse klein wird.

In einer bevorzugten Ausführungsform erstrecken sich, wie erwähnt, die Strömungsleitelemente in axialer Richtung des Rührermischers über eine Länge von mindestens 30 mm. Bevorzugt werden drei bis zehn dieser Strömungsleitelemente über den Umfang verteilt eingebaut. Dadurch ist gewährleistet, dass die Umfangsgeschwindigkeit deutlich reduziert wird.

In einer weiteren bevorzugten Ausführungsform sind die Strömungsleitelemente so gestaltet, dass sie sich radial von einem minimalen Innenradius bis zu einem maximalen Außenradius erstrecken, wobei der minimale Innenradius mindestens dem 0,1-fachen des Radius der inneren Zylinderwandung in diesem Bereich entspricht und wobei der maximale Außenradius dem Radius der inneren Zylinderwandung in diesem Bereich entspricht.

Ein wichtiges Kriterium bei der Auslegung der Strömungsleitelemente ist der zusätzliche Mischkammerdruck, den diese Elemente verursachen. Da sich eine ausreichende Nukleierung, d. h. die Bildung einer ausreichenden Menge an kleinen Luftblasen in der Mischkammer, leichter bei niedrigem Mischkammerdruck erreichen lässt, wird das Verfahren bevorzugt so ausgestaltet, dass der Druck am Eintritt in die Mischkammer bei maximal 1,5 bar oberhalb des Atmosphärendruckes (also bei maximal 2,5 bar absolut) liegt. Der Einfluss des Mischkammerdruckes auf die Schaumstruktur wird beispielsweise in der bereits oben genannten EP 0 565 974 B1 beschrieben.

Die Strömungsleitelemente werden bevorzugt im Übergangsbereich zwischen dem durch die Rührerwelle und die zylindrische Mischkammer gebildeten ringförmigen Strömungsraum und dem anschließenden im wesentlichen zylindrischen Strömungsraum angebracht.

Eine weitere vorteilhafte Ausgestaltung zeichnet sich dadurch aus, dass im Übergangsbereich zwischen dem durch die Rührerwelle und die zylindrische Mischkammer gebildeten Ringraum und dem anschließenden im wesentlichen zylindrischen Strömungsraum, also im Bereich des Drosselspalts, ein zur Rührerachse rotationssymmetrischer Konus angebracht ist, der in Strömungsrichtung mit einem Winkel zwischen 15° und 120° zusammenläuft.

Am Austritt aus der eigentlichen Mischzone strömen große Anteile des Reaktionsgemisches aufgrund der hohen Umfangsgeschwindigkeit außen aus der Mischzone heraus. Die Strömung muss nun hinter dem Rührerende so zusammengeführt werden, dass dabei möglichst im zentralen Bereich keine Rückströmung (Wirbelbildung) entsteht. Die vorgeschlagene konusförmige Ausführung des Wellenendes wirkt sich positiv auf das Zusammenfließen der Strömung im zentralen Bereich ohne Wirbelbildung und Rückströmung aus.

Somit werden in vorteilhafter Weise gute Mischergebnisse bei einer zweiphasigen rotierenden Strömung erreicht.

Durch die vorgesehene Lösung wird die Strömung im Bereich der Zusammenführung aus dem ersten Abschnitt des Rührermischers (d. h. insbesondere aus dem oberen Ringraum) in den zweiten Abschnitt des Rührermischers (d. h. insbesondere in den zylindrischen Raum) im Zentrum (d. h. in der Mitte) anders als im Falle der Anordnung eines "Kreuzes" (d. h. mindestens zweier sich kreuzender Bleche, wie im Stand der Technik bekannt) nicht behindert. Das Kreuz reduziert zwar die Rotation ebenfalls, aber es begünstigt nicht, dass die Strömung verstärkt den zentralen Bereich füllt. Weiterhin begünstigen gerade die durch das Kreuz entstehenden Zwickel eine potentielle Ansammlung von Gas im Zentrum, was nachteilig ist. Die erfindungsgemäß vorgesehene Verfahrensweise und Ausgestaltung der Vorrichtung vermeiden diesen Nachteil.

In den Zeichnungen ist ein Ausführungsbeispiel der Erfindung dargestellt. Es zeigen:

Fig. 1    den Längsschnitt durch einen Rührermischer gemäß dem Stand der Technik,

Fig. 2    den Längsschnitt durch einen Rührermischer gemäß einem Ausführungsbeispiel der Erfindung,

Fig. 3    schematisch den Schnitt senkrecht zur axialen Richtung des Rührermischers durch denselben, wobei der Verlauf der Geschwindigkeit des Gemisches in Umfangsrichtung angedeutet ist, und

Fig. 4    schematisch den Schnitt senkrecht zur axialen Richtung des Rührermischers durch denselben, wobei eine Möglichkeit der Ausgestaltung von Strömungsleitelementen dargestellt ist.

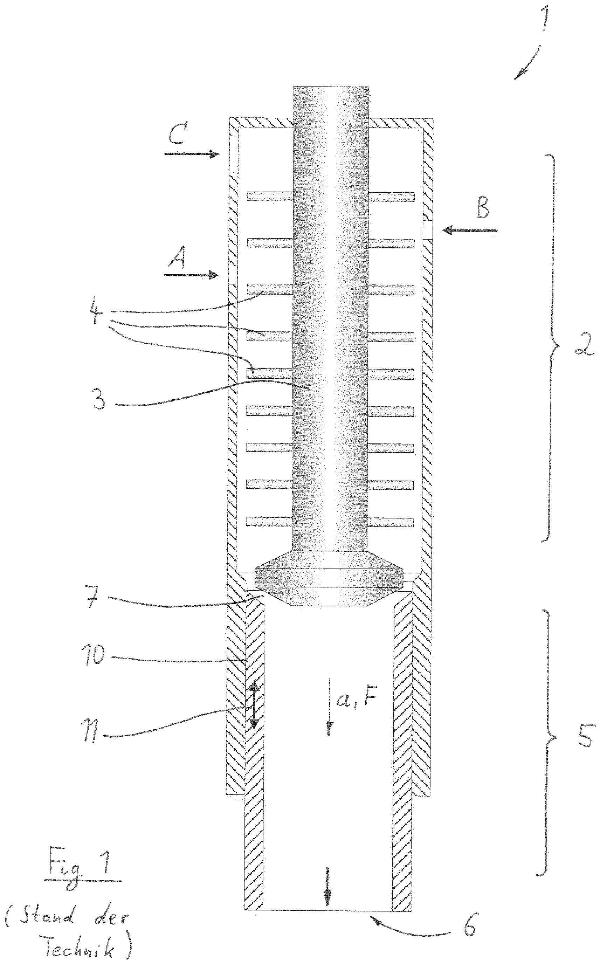

In Figur 1 ist zunächst ein vorbekannter Rührermischer 1 dargestellt. Der Rührermischer 1 besteht in einem ersten axialen Abschnitt 2 aus einer zylindrischen Mischkammer und einem darin mit verstellbarer Drehzahl rotierenden Rührer, der durch einen Motor (nicht dargestellt) angetrieben wird. Der Rührer weist eine Rührerwelle 3 auf, an dem eine Anzahl Rührelemente 4 angeordnet ist.

Die hier dargestellten zylindrischen Rührelemente 4 können auch eine beliebige andere Geometrie aufweisen, wie es beispielsweise in der oben genannten EP 1 539 450 B1 dargestellt ist (schräg angestellte Blätter). Es können außerdem auch im ersten Abschnitt 2 des Rührermischers 1 bereits strombrechende Elemente angeordnet sein.

Der Rührermischer 1 enthält weiterhin Zulauföffnungen für die Komponenten A (Isocyanat), B (Polyol) und C (Additive), wobei die einzelnen Komponenten dosiert zugeführt werden. Er hat weiterhin einen verstellbaren Drosselspalt 7, der durch die axiale Verstellung (s. Verstellrichtung 11) eines Bauteils im Zusammenspiel mit dem Auslaufkegel am Ende der Rührerwelle 3 eingestellt werden kann, wodurch sich der Mischkammerdruck beeinflussen lässt.

Die Komponenten A, B und C werden durch die Zulauföffnungen in die Mischkammer des Rührermischers 1 dosierend gefördert und werden darin durch den Rührer 3, 4 vermischt. Dies geschieht in der ringförmigen Mischzone, die durch die Rührerwelle 3 und die zylindrische Mischkammerhülse (Gehäuse 10) gebildet wird. In dieser Mischzone rotieren die Rührelemente 4 mit hoher Drehzahl und sorgen dadurch für die Vermischung der beteiligten Komponenten.

Typische Drehzahlen liegen je nach Vermischbarkeit der Komponenten zwischen 500 und 8.000 U/min. Der Durchmesser der Mischkammer liegt typischerweise in einem Bereich zwischen 50 und 150 mm. Der Durchmesser der Rührerwelle 3 liegt typischerweise in einem Bereich zwischen 20 und 80 mm.

Das dabei entstehende Reaktionsgemisch enthält neben den vermischten Flüssig-Komponenten zusätzlich Gasblasen, die als Nukleationskeime für die späteren Zellen dienen. Der Anteil an Gasblasen im ersten Abschnitt 2 des Rührermischers 1 (also in der Mischkammer) liegt dabei unterhalb von 5 %. Das während der weiteren chemischen Reaktion entstehende Kohlendioxid oder auch gegebenenfalls vorhandene und während der weiteren Reaktion verdampfende physikalische Treibmittel diffundieren in diese Nukleationskeime und erzeugen dadurch die schaumige Struktur des Endprodukts. Des weiteren können auch größere Blasen, die bereits im Leitungssystem vorhanden waren, im Reaktionsgemisch vorhanden sein.

Im Anschluss verlässt dieses mehrphasige Reaktionsgemisch die eigentliche Mischzone durch den verstellbaren Drosselspalt 7 am Ende des Rührers und tritt in den zylindrischen Strömungsraum (zweiter Abschnitt 5 des Rührermischers 1) ein und schließlich durch die Auslassöffnung 6 aus.

Die axiale Richtung a des Rührermischers 1 ist angegeben und entspricht der Förderrichtung F des Gemisches.

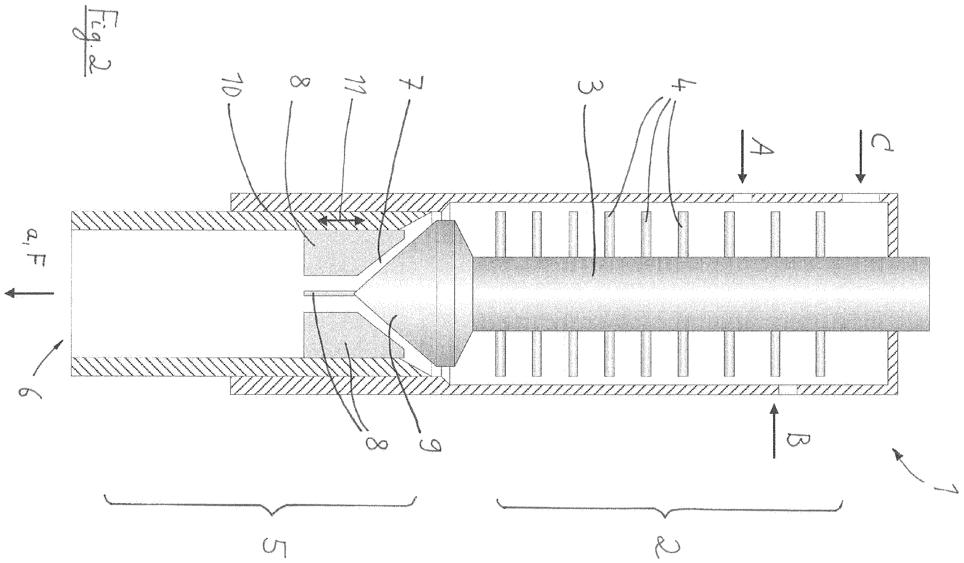

Der grundsätzlich gleiche Aufbau des Rührermischers 1 gilt auch für die vorliegende Erfindung, wie sie exemplarisch in Figur 2 dargestellt ist.

Der wesentliche Unterschied zur vorbekannten Lösung besteht darin, dass das Polyurethan-Reaktionsgemisch durch die Rührelemente 4 im ersten Abschnitt 2 auf eine maximale Geschwindigkeit ($v_{max}$) in Umfangsrichtung U von mindestens 5 m/min beschleunigt wird, dass dann allerdings im Bereich des Drosselspalts 7 Strömungsleitelemente 8 angeordnet sind, mit denen die maximale Geschwindigkeit $v_{max}$ in Umfangsrichtung U des Polyurethan-Reaktionsgemisches auf höchstens 2 m/min, vorzugsweise auf höchstens 1 m/min, abgebremst wird.

Zur Definition besagter Geschwindigkeit wird auf Figur 3 Bezug genommen, in der zu sehen ist, wie die Rührerwelle 3 mit den Rührelementen 4 rotiert und dabei dem Gemisch eine Geschwindigkeit in Umfangsrichtung U aufgegeben wird. Während die Geschwindigkeit im Bereich des Gehäuses 10 durch Anhaftung an der Gehäusewand im wesentlichen Null ist und die Geschwindigkeit an der Oberfläche der Rührerwelle 3 durch die dort herrschenden Geschwindigkeit als Produkt des Radius der Rührerwelle 3 mit deren Drehgeschwindigkeit vorgegeben ist, ergibt sich über den radialen Verlauf das schematisch angedeutete Geschwindigkeitsprofil mit einer maximalen Geschwindigkeit $v_{max}$.

Die Strömungsleitelemente 8 sind im Ausführungsbeispiel unmittelbar hinter dem Drosselspalt 7 angeordnet und bestehen hier durch vier gerade Bleche, wie es aus der Zusammenschau mit Figur 4 ersichtlich ist.

Am Ende der Rührerwelle 3 ist ein konischer Endbereich 9 angeordnet, der am axialen Ende spitz zusammenläuft, wobei diese Spitze auch abgerundet oder etwas stumpfer gestaltet sein kann, um einerseits keine Verletzungsgefahr darzustellen und andererseits dafür sorgt, dass die Spitze des Konus nicht so leicht beschädigt werden kann.

Die Strömungsleitelemente 8 sind also im Übergangsbereich zwischen der ringförmigen Mischzone in den sich anschließenden zylindrischen Strömungsraum angeordnet. Hierdurch wird frühzeitig die Rotation des flüssigen Reaktionsgemisches reduziert, nachdem es die Mischzone (erster Abschnitt des Rührermischers 1) verlassen hat.

Dadurch wird verhindert, dass die Gasblasen im Gemisch aufgrund des Zentrifugalfeldes, welches durch das schnell rotierende Reaktionsgemisch entsteht, in die Mitte wandern und sich unter dem Konus ansammeln.

Die Gestaltung des Konus verhindert außerdem eine Rückströmung in diesem Bereich. Gerade die Kombination aus Rückströmung, Zentrifugalfeld und Gravitationsfeld bewirkt das Ansammeln von Gas hinter der Rührerwelle. Die Kombination aus Leitelementen 8 und konischem Endbereich der Rührerwelle 3 verhindert diesen Effekt in besonders vorteilhafter Weise.

Wie bereits erläutert, zeigt Figur 4 eine Ausführungsform der Strömungsleitelemente 8, gesehen in axiale Richtung a. In diesem Beispiel sind vier Strömungsleitelemente 8 (Störbleche) über den Umfang gleichmäßig angeordnet. Die Strömungsleitelemente 8 sind nicht in der Mitte zu einem Stern oder Kreuz verbunden. Die Kombination aus offenen Strömungsquerschnitt im Zentrum und zusätzlichem Strömungswiderstand durch die Strömungsleitelemente 8 radial außen bewirkt, dass das Material bevorzugt durch die Mitte (also zentral) fließt, so dass in diesem Bereich keine Rückströmung entsteht, die dann zu einem Ansammeln von Gasblasen in diesem Bereich führen würde.

Die bevorzugte Anzahl an Strömungsleitelementen 8 liegt zwischen drei und zehn. Die axiale Ausdehnung derselben (in axiale Richtung a) sollte mindestens 30 mm, bevorzugt mindestens 40 mm betragen, damit die Geschwindigkeit bzw. Rotation effektiv reduziert werden kann.

Zu erkennen ist in Figur 4 noch, dass die radiale Erstreckung e ausgehend von der Innenwandung des Gehäuses 10 in Richtung Zentrum reicht, dieses allerdings, wie oben erläutert, nicht erreicht wird. Die radiale Erstreckung e sollte maximal 90 % des Radius des Gehäuses 10 am Ort der Strömungsleitelemente 8 betragen.

**Bezugszeichenliste:**

1    Rührermischer
2    erster Abschnitt des Rührermischers
3    Rührerwelle
4    Rührelement
5    zweiter Abschnitt des Rührermischers
6    Auslassöffnung
7    Drosselspalt
8    Strömungsleitelement
9    konischer Endbereich der Rührerwelle
10   Gehäuse
11   Verstellrichtung

A    Polyolkomponente
B    Isocyanatkomponente
C    Additiv

a    axiale Richtung des Rührermischers
F    Förderrichtung des Polyurethan-Reaktionsgemisches

$v_{max}$ maximale Geschwindigkeit
U Umfangsrichtung
e radiale Erstreckung des Strömungsleitelements

**Patentansprüche**

1. Verfahren zur kontinuierlichen Vermischung mindestens einer Polyolkomponente (A) mit mindestens einer Isocyanatkomponente (B) zur Herstellung eines Polyurethan-Reaktionsgemisches, bei dem die mindestens eine Polyolkomponente (A) und die mindestens eine Isocyanatkomponente (B) einem Rührermischer (1) zugeführt werden,

   wobei der Rührermischer (1) einen ersten Abschnitt (2) aufweist, in dem eine drehantreibbare Rührerwelle (3) mit einer Anzahl Rührelemente (4) angeordnet ist, mit denen die Komponenten (A, B) vermischt werden,
   wobei der Rührermischer (1) einen zweiten Abschnitt (5) aufweist, durch den das Polyurethan-Reaktionsgemisches gefördert und einer Auslassöffnung (6) zugeführt wird,
   wobei zwischen dem ersten Abschnitt (2) und dem zweiten Abschnitt (5) ein Drosselspalt (7) angeordnet ist, durch den das Polyurethan-Reaktionsgemisch hindurchgefördert wird,
   **dadurch gekennzeichnet,**
   **dass** das Polyurethan-Reaktionsgemisch durch die Rührelemente (4) im ersten Abschnitt (2) auf eine maximale Geschwindigkeit ($v_{max}$) in Umfangsrichtung (U) von mindestens 5 m/min beschleunigt wird und
   **dass** im Bereich des Drosselspalts (7) Strömungsleitelemente (8) angeordnet sind, mit denen die maximale Geschwindigkeit ($v_{max}$) in Umfangsrichtung (U) des Polyurethan-Reaktionsgemisches um mindestens 50 %, vorzugsweise um mindestens 70 %, reduziert wird, wobei sich zum Abbremsen des Polyurethan-Reaktionsgemisches die Strömungsleitelemente (8) in axiale Richtung (a) des Rührermischers (1) mindestens 30 mm erstrecken, wobei die Strömungsleitelemente (8) als Bleche ausgebildet sind, die am Gehäuse (10) des Rührermischers (1) oder einem mit diesem verbundenen Teil befestigt sind und wobei die Strömungsleitelemente (8) eine radiale Erstreckung aufweisen, die in einem Abstand von mindestens 10 % des Innenradius des Gehäuses (10) am Ort der Strömungsleitelemente (8) endet.

2. Verfahren nach Anspruch 1, **dadurch gekennzeichnet, dass** die Strömungsleitelemente (8) in Förderrichtung (F) des Polyurethan-Reaktionsgemisches unmittelbar hinter dem Drosselspalt (7) angeordnet sind.

3. Verfahren nach Anspruch 1 oder 2, **dadurch gekennzeichnet, dass** die Strömungsleitelemente (8) in Förderrichtung (F) des Polyurethan-Reaktionsgemisches unmittelbar vor dem Drosselspalt (7) angeordnet sind.

4. Verfahren nach einem der Ansprüche 1 bis 3, **dadurch gekennzeichnet, dass** der Drosselspalt (7) durch einen konisch ausgebildeten Endbereich (9) der Rührerwelle (3) gebildet wird.

5. Verfahren nach einem der Ansprüche 1 bis 4, **dadurch gekennzeichnet, dass** der Drosselspalt (7) in seiner Größe einstellbar ist.

6. Verfahren nach einem der Ansprüche 1 bis 5, **dadurch gekennzeichnet, dass** der Druck im Rührermischer (1) am Eintritt der Komponenten (A, B) maximal 2,0 bar höher ist als der Umgebungsdruck.

7. Rührermischer (1) zum kontinuierlichen Vermischen mindestens einer Polyolkomponente (A) mit mindestens einer Isocyanatkomponente (B) zur Herstellung eines Polyurethan-Reaktionsgemisches nach einem der Ansprüche 1 bis 6, wobei der Rührermischer (1) einen ersten Abschnitt (2) aufweist, in dem eine drehantreibbare Rührerwelle (3) mit einer Anzahl Rührelemente (4) angeordnet ist, mit denen die Komponenten (A, B) vermischt werden können, wobei der Rührermischer (1) einen zweiten Abschnitt (5) aufweist, durch den das Polyurethan-Reaktionsgemisches gefördert und einer Auslassöffnung (6) zugeführt werden kann, wobei zwischen dem ersten Abschnitt (2) und dem zweiten Abschnitt (5) ein Drosselspalt (7) angeordnet ist, durch den das Polyurethan-Reaktionsgemisch hindurchgefördert werden kann,
   **dadurch gekennzeichnet,**
   **dass** im Bereich des Drosselspalts (7) Strömungsleitelemente (8) angeordnet sind, mit denen die Bewegung des Polyurethan-Reaktionsgemisches in Umfangsrichtung (U) abgebremst werden kann, wobei sich die Strömungsleitelemente (8) in axiale Richtung (a) des Rührermischers (1) mindestens 30 mm erstrecken, wobei die Strömungsleitelemente (8) als Bleche ausgebildet sind, die am Gehäuse (10) des Rührermischers (1) oder einem mit diesem verbundenen Teil befestigt sind und wobei die Strömungsleitelemente (8) eine radiale Erstreckung aufweisen, die in einem Abstand von mindestens 10 % des Innenradius des Gehäuses (10) am Ort der Strömungsleitelemente (8) endet.

8. Rührermischer nach Anspruch 7, **dadurch gekennzeichnet, dass** die Strömungsleitelemente (8) in Förderrichtung (F) des Polyurethan-Reaktionsgemisches unmittelbar hinter dem Drosselspalt (7) angeordnet sind.

9. Rührermischer nach Anspruch 7 oder 8, **dadurch gekennzeichnet, dass** die Strömungsleitelemente (8) in Förderrichtung (F) des Polyurethan-Reaktionsgemisches unmittelbar vor dem Drosselspalt (7) angeordnet sind.

10. Rührermischer nach einem der Ansprüche 7 bis 9, **dadurch gekennzeichnet, dass** der Drosselspalt (7) durch einen konisch ausgebildeten Endbereich (9) der Rührerwelle (3) gebildet wird.

11. Rührermischer nach Anspruch 10, **dadurch gekennzeichnet, dass** der Kegelwinkel des Endbereichs (9) zwischen 15° und 120° beträgt, vorzugsweise zwischen 60° und 100°.

12. Rührermischer nach einem der Ansprüche 7 bis 11, **dadurch gekennzeichnet, dass** sich die Strömungsleitelemente (8) in radiale Richtung erstrecken.


**Claims**

1. Method for continuously mixing at least one polyol component (A) with at least one isocyanate component (B) to produce a polyurethane reaction mixture, in which the at least one polyol component (A) and the at least one isocyanate component (B) are fed to a stirrer mixer (1),

   > wherein the stirrer mixer (1) has a first section (2) in which a rotatably drivable stirrer shaft (3) with a number of stirring elements (4) is arranged, with which the components (A, B) are mixed,
   > wherein the stirrer mixer (1) has a second section (5) through which the polyurethane reaction mixture is conveyed and fed to an outlet opening (6),
   > wherein a throttle gap (7) is arranged between the first section (2) and the second section (5), through which the polyurethane reaction mixture is conveyed,
   > **characterized in that**
   > the polyurethane reaction mixture is accelerated by the stirring elements (4) in the first section (2) to a maximum velocity ($v_{max}$) in the circumferential direction (U) of at least 5 m/min and that flow guiding elements (8) are arranged in the region of the throttle gap (7), by means of which the maximum velocity ($v_{max}$) in the circumferential direction (U) of the polyurethane reaction mixture is reduced by at least 50 %, preferably by at least 70 %, wherein the flow guiding elements (8) extending at least 30 mm in the axial direction (a) of the stirrer mixer (1) in order to slow down the polyurethane reaction mixture, wherein the flow guiding elements (8) being designed as metal sheets which are fastened to the housing (10) of the stirrer mixer (1) or to a part connected thereto and wherein the flow guiding elements (8) having a radial extent which ends at a distance of at least 10 % of the inner radius of the housing (10) at the location of the flow guiding elements (8).

2. Method according to claim 1, **characterized in that** the flow guiding elements (8) are arranged immediately downstream of the throttle gap (7) in the conveying direction (F) of the polyurethane reaction mixture.

3. Method according to claim 1 or 2, **characterized in that** the flow guiding elements (8) are arranged immediately upstream of the throttle gap (7) in the conveying direction (F) of the polyurethane reaction mixture.

4. Method according to one of claims 1 to 3, **characterized in that** the throttle gap (7) is formed by a conically shaped end region (9) of the stirrer shaft (3).

5. Method according to one of claims 1 to 4, **characterized in that** the throttle gap (7) is adjustable in size.

6. Method according to one of claims 1 to 5, **characterized in that** the pressure in the stirrer mixer (1) at the inlet of the components (A, B) is at most 2.0 bar higher than the ambient pressure.

7. Stirrer mixer (1) for continuously mixing at least one polyol component (A) with at least one isocyanate component (B) to produce a polyurethane reaction mixture according to one of claims 1 to 6, wherein the stirrer mixer (1) has a first section (2) in which a rotatably drivable stirrer shaft (3) is arranged with a number of stirring elements (4) with which the components (A, B) can be mixed, wherein the stirrer mixer (1) having a second section (5) through which the polyurethane reaction mixture can be conveyed and fed to an outlet opening (6), wherein a throttle gap (7) is arranged between the first section (2) and the second section (5) through which the polyurethane reaction mixture can be conveyed,
   **characterized in that**
   flow guiding elements (8) are arranged in the region of the throttle gap (7), by means of which the movement of the polyurethane reaction mixture can be slowed down in the circumferential direction (U), wherein the flow guiding elements (8) extending at least 30 mm in the axial direction (a) of the stirrer mixer (1), wherein the flow guiding elements (8) being designed as metal sheets which are fastened to the housing (10) of the stirrer mixer (1) or to a part connected thereto and wherein the flow guiding elements (8) having a radial extent which ends at a distance of at least 10 % of the inner radius of the housing (10) at the location of the flow guiding elements (8).

8. Stirrer mixer according to claim 7, **characterized in that** the flow guiding elements (8) are arranged immediately downstream of the throttle gap (7) in the conveying direction (F) of the polyurethane reaction mixture.

9. Stirrer mixer according to claim 7 or 8, **characterized in that** the flow guiding elements (8) are arranged immediately upstream of the throttle gap (7) in the conveying direction (F) of the polyurethane reaction mixture.

10. Stirrer mixer according to one of claims 7 to 9, **characterized in that** the throttle gap (7) is formed by a conically shaped end region (9) of the stirrer shaft (3).

11. Stirrer mixer according to claim 10, **characterized in that** the cone angle of the end portion (9) is between 15° and 120°, preferably between 60° and 100°.

12. Stirrer mixer according to one of claims 7 to 11, **characterized in that** the flow guiding elements (8) extend in radial direction.

**Revendications**

1. Procédé de mélange continu d'au moins un composant polyol (A) avec au moins un composant isocyanate (B) pour la fabrication d'un mélange réactionnel de polyuréthane, selon lequel l'au moins un composant polyol (A) et l'au moins un composant isocyanate (B) sont introduits dans un mélangeur-agitateur (1),

le mélangeur-agitateur (1) comprenant une première section (2), dans laquelle un arbre d'agitateur entraînable en rotation (3) muni d'un nombre d'éléments d'agitation (4), avec lesquels les composants (A, B) sont mélangés, est agencé, le mélangeur-agitateur (1) comprenant une deuxième section (5), à travers laquelle le mélange réactionnel de polyuréthane est transporté et introduit dans une ouverture de sortie (6), une fente d'étranglement (7) étant agencée entre la première section (2) et la deuxième section (5), à travers laquelle le mélange réactionnel de polyuréthane est transporté,
**caractérisé en ce que**
le mélange réactionnel de polyuréthane est accéléré par les éléments d'agitation (4) dans la première section (2) à une vitesse maximale ($v_{max}$) dans la direction circonférentielle (U) d'au moins 5 m/min, et
des éléments de guidage d'écoulement (8) sont agencés dans la zone de la fente d'étranglement (7), avec lesquels la vitesse maximale ($v_{max}$) dans la direction circonférentielle (U) du mélange réactionnel de polyuréthane est réduite d'au moins 50 %, de préférence d'au moins 70 %, les éléments de guidage d'écoulement (8) s'étendant sur au moins 30 mm dans la direction axiale (a) du mélangeur-agitateur (1) pour le freinage du mélange réactionnel de polyuréthane, les éléments de guidage d'écoulement (8) étant configurés sous la forme de plaques, qui sont fixées sur le boîtier (10) du mélangeur-agitateur (1) ou sur une pièce reliée à celui-ci, et les éléments de guidage d'écoulement (8) présentant une étendue radiale qui se termine à un écartement d'au moins 10 % du rayon intérieur du boîtier (10) à l'emplacement des éléments de guidage d'écoulement (8).

2. Procédé selon la revendication 1, **caractérisé en ce que** les éléments de guidage d'écoulement (8) sont agencés directement après la fente d'étranglement (7) dans la direction de transport (F) du mélange réactionnel de polyuréthane.

3. Procédé selon la revendication 1 ou 2, **caractérisé en ce que** les éléments de guidage d'écoulement (8) sont agencés directement avant la fente d'étranglement (7) dans la direction de transport (F) du mélange réactionnel de polyuréthane.

4. Procédé selon l'une quelconque des revendications 1 à 3, **caractérisé en ce que** la fente d'étranglement (7) est formée par une zone d'extrémité configurée coniquement (9) de l'arbre d'agitateur (3).

5. Procédé selon l'une quelconque des revendications 1 à 4, **caractérisé en ce que** la fente d'étranglement (7) est de taille ajustable.

6. Procédé selon l'une quelconque des revendications 1 à 5, **caractérisé en ce que** la pression dans le mélangeur-agitateur (1) à l'entrée des composants (A, B) est au plus 2,0 bar plus élevée que la pression ambiante.

7. Mélangeur-agitateur (1) pour le mélange continu d'au moins un composant polyol (A) avec au moins un composant isocyanate (B) pour la fabrication d'un mélange réactionnel de polyuréthane selon l'une quelconque des revendications 1 à 6, le mélangeur-agitateur (1) comprenant une première section (2), dans laquelle un arbre d'agitateur entraînable en rotation (3) muni d'un nombre d'éléments d'agitation (4), avec lesquels les composants (A, B) peuvent être mélangés, est agencé, le mélangeur-agitateur (1) comprenant une deuxième section (5), à travers laquelle le mélange réactionnel de polyuréthane peut être transporté et introduit dans une ouverture de sortie (6), une fente d'étranglement (7) étant agencée entre la première section (2) et la deuxième section (5), à travers laquelle le mélange réactionnel de polyuréthane peut être transporté,
**caractérisé en ce que**
des éléments de guidage d'écoulement (8) sont agencés dans la zone de la fente d'étranglement (7), avec lesquels le déplacement du mélange réactionnel de polyuréthane dans la direction circonférentielle (U) peut être freiné, les éléments de guidage d'écoulement (8) s'étendant sur au moins 30 mm dans la direction axiale (a) du mélangeur-agitateur (1), les éléments de guidage d'écoulement (8) étant configurés sous la forme de plaques, qui sont fixées sur le boîtier (10) du mélangeur-agitateur (1) ou sur une pièce reliée à celui-ci, et les éléments de guidage d'écoulement (8) présentant une étendue radiale qui se termine à un écartement d'au moins 10 % du rayon intérieur du boîtier (10) à l'emplacement des éléments de guidage d'écoulement (8).

8. Mélangeur-agitateur selon la revendication 7, **caractérisé en ce que** les éléments de guidage d'écoulement (8) sont agencés directement après la fente d'étranglement (7) dans la direction de transport (F) du mélange réactionnel de polyuréthane.

9. Mélangeur-agitateur selon la revendication 7 ou 8, **caractérisé en ce que** les éléments de guidage d'écoulement (8) sont agencés directement avant la fente d'étranglement (7) dans la direction de transport (F) du mélange réactionnel de polyuréthane.

10. Mélangeur-agitateur selon l'une quelconque des revendications 7 à 9, **caractérisé en ce que** la fente d'étranglement (7) est formée par une zone d'extrémité configurée coniquement (9) de l'arbre d'agitateur (3).

11. Mélangeur-agitateur selon la revendication 10, **caractérisé en ce que** l'angle de cône de la zone d'extrémité (9) est compris entre 15° et 120°, de préférence entre 60° et 100°.

12. Mélangeur-agitateur selon l'une quelconque des revendications 7 à 11, **caractérisé en ce que** les éléments de guidage d'écoulement (8) s'étendent dans la direction radiale.

Fig. 1
(Stand der Technik)

Fig. 2

$u$

$V_{max}$

3

4

$a$

10

Fig. 3

$u$

8

8

$a$

8

$e$

10

Fig. 4

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 2558304 A1
- EP 0328936 A1
- DE 3623932 A1
- DE 102011013742 A1
- EP 1539450 B1
- EP 0565974 B1

**In der Beschreibung aufgeführte Nicht-Patentliteratur**

- **B. KANNER ; T. G. DECKER.** Urethane Foam Formation - Role of the Silicone Surfactant. *Journal of Cellular Plastic,* 1969, vol. 5, 32-39